Europäisches Patentamt

European Patent Office

Office européen des brevets

(11) Veröffentlichungsnummer : **0 066 752**
**B1**

(12) **EUROPÄISCHE PATENTSCHRIFT**

(45) Veröffentlichungstag der Patentschrift :
05.03.86

(51) Int. Cl.⁴ : **B 01 D 25/12**

(21) Anmeldenummer : **82104445.0**

(22) Anmeldetag : **21.05.82**

(54) **Filterplatte für Filterpressen.**

(30) Priorität : **30.05.81 DE 3121656**

(43) Veröffentlichungstag der Anmeldung :
**15.12.82 Patentblatt 82/50**

(45) Bekanntmachung des Hinweises auf die Patenterteilung : **05.03.86 Patentblatt 86/10**

(84) Benannte Vertragsstaaten :
**AT BE CH DE FR GB IT LI NL SE**

(56) Entgegenhaltungen :
**BE-A- 538 380**
**DE-B- 1 214 201**
**DE-C- 139 983**
**FR-A- 1 234 019**
**FR-E- 52 459**
**GB-A- 420 021**
**GB-A- 655 385**

(73) Patentinhaber : **Rittershaus & Blecher GmbH**
**Wittensteinstrasse 80-100**
**D-5600 Wuppertal 2 (DE)**

(72) Erfinder : **Oelbermann, Max**
**Moltkestrasse 19**
**D-5630 Remscheid (DE)**

(74) Vertreter : **Peerbooms, Rudolf, Dipl.-Phys.**
**Postfach 200 208 Dickmannstrasse 45C**
**D-5600 Wuppertal 2 (DE)**

EP 0 066 752 B1

## Beschreibung

Die Erfindung betrifft eine Filterplatte für Filterpressen, mit einem ringsum laufenden verdickten Rand und mit einem Kammerboden, dessen Mittelfläche gewölbt ist und der innerhalb des vom Rand umschlossenen Raumes liegt.

Die Wirtschaftlichkeit von Filterpressen hängt stark von der Filterfläche und dem Kammervolumen ab. Die Filterfläche entspricht bei Kammerfilterplatten im wesentlichen der Größe des Kammerbodens, während das Kammervolumen durch die Differenz in der Dicke des Randes und des Kammerbodens bestimmt wird. Bei den bekannten Kammerfilterplatten beträgt die Dicke des Kammerbodens etwa ein Drittel der Randdicke, so daß bei Filterpressen etwa nur zwei Drittel der Gesamtlänge eines Filterplattenpaketes als Kammerräume bzw. Filterkuchenräume zur Verfügung stehen. Angesichts der hohen Stabilitätsanforderungen, die sich aufgrund des hohen Filtrierdruckes ergeben, ist es bei der bisherigen Bauart von Kammerfilterplatten nicht möglich, den Kammerraum etwa durch dünnere Ausbildung des Kammerbodens relativ zum Rand zu vergrößern. Ebenfalls war es bisher nicht möglich, Kammerfilterplatten von z. B. 3 × 3 m Kantenlänge für Hochdruckfilterpressen zu bauen.

Eine gattungsgemäße Filterplatte ist durch die japanische Patentschrift 56-13488 bekannt. Dort ist jedoch nur eine einfache Wölbung vorgesehen, weshalb eine solche Filterplatte nur in einer Einbaulage verwendet werden kann, was oft lästig ist. Noch entscheidender ist jedoch, daß bei solchen Filterplatten, falls man diese groß und mit verhältnismäßig dünnem Kammerboden herstellt, beim Abkühlen des Randes eine sehr weite Ausbeulung des Kammerbodens auftritt. Werden dann später, was in der Praxis häufig der Fall ist, heiße Medien gefiltert, beult sich die Platte noch weiter aus, wobei sie im allgemeinen weit zur Seite hin aus dem vom Plattenrand umschlossenen Raum heraustritt. Hieraus ergeben sich oft übermäßige Beanspruchungen der zwischen solchen Filterplatten eingespannten Filtertücher und Membranen. Durch die AT-PS 64 704 ist ferner eine einfach gewölbte Filterplatte bekannt, bei der der Kammerboden bereits von Hause aus weit aus dem vom Plattenrand umschlossenen Raum seitlich heraustritt.

Ferner sind Filterplatten bekannt (DE-GMs 19 96 053, 19 49 234, GB-PS 998 421), die an ihren Hauptflächen konkav ausgehöhlt sind und deren Mittelfläche aber eben ist. Mit solchen Platten lassen sich aber nur verhältnismäßig kleine Kammerräume erzielen.

Schließlich sind Filterplatten bekannt (GB-PS 895 453), die in nur einer Ebene gewellt sind. Solche Filterplatten können in der anderen Richtung auftretenden thermischen Spannungen nur sehr begrenzt standhalten.

Der Erfindung liegt die Aufgabe zugrunde, eine Filterplatte der eingangs genannten Art zu schaffen, deren Kammerboden im Verhältnis zum Rand besonders dünn bemessen werden kann, die darüberhinaus in übergroßen Abmessungen von z. B. 3 × 3 m Kantenlänge herstellbar und in beiden Einbaulagen verwendbar ist.

Zur Lösung dieser Aufgabe ist erfindungsgemäß vorgesehen, daß die Mittelfläche des Kammerbodens in allen vier Quadranten abwechselnd in entgegengesetzte Richtungen ausgewölbt und die Filterplatte wendesymmetrisch und somit in beiden Wendelagen in ein Filterplattenpaket einbaubar ist.

Wie umfangreiche Untersuchungen und Erprobungen gezeigt haben, nehmen die einzelnen Wölbungsbereiche die beim Abkühlungsprozeß während des Herstellvorganges oder später beim Behandeln heißer Medien auftretenden thermischen Spannungen auf, jedoch kompensieren sich die gegensätzlich gerichteten Ausbeulbewegungen derart, daß der Kammerboden innerhalb des vom Rand umschlossenen Raumes bleibt und also die Filtertücher und Menbranen keine zusätzlichen Beanspruchungen durch den sich ausbeulenden Kammerboden erfahren. Dabei ist zugleich von großem praktischen Vorteil, daß solche Filterplatten in beiden Wendelagen innerhalb eines Filterplattenpaketes eingebaut werden können.

Die mehrfach gegensätzlich gewölbte Filterplatte weist eine hohe Stabilität gegenüber mechanischen und hydraulischen Druckbelastungen auf. Die Filterplatte kann nunmehr wesentlich dünner als bisher bemessen werden, vorzugsweise bei Kammerfilterplatten nur ein Viertel der Dicke des umlaufenden Randes aufweisen.

In Ausgestaltung der Erfindung kann vorgesehen werden, daß die Filterplatte nach beiden Seiten hin gleich weit aus der Mittelebene der Filterplatte ausgewölbt ist.

Der Erfindung zufolge kann auch jeder Quadrant der Platte aus vier Unterquadranten mit jeweils paarweise entgegengesetzter Wölbungsrichtung bestehen.

Die Filterplatte nach der Erfindung wird vorteilhafterweise z. B. aus Graphitgrauguß oder Kugelgraphitguß gegossen oder aus Kunststoff geformt. Dabei hat sich bei Kammerfilterplatten gezeigt, daß bei einer gewölbten Ausbildung des Kammerbodens ein verhältnismäßig großer Dickenunterschied zwischen Rand und Kammerboden vorgesehen werden kann, ohne daß es zu Brüchen oder Rissen bzw. Verwerfungen beim Abkühlen der Gußmasse kommt. Der verdickte Rand schrumpft sich vielmehr bei seinem verzögerten Abkühlen auf den Kammerboden auf, welcher durch Auswölben dem vom Rand ausgeübten Aufschrumpfdruck kontrolliert ausweicht. Infolgedessen können nach der Erfindung insbesondere auch Kammerfilterplatten in übergroßen Abmessungen hergestellt werden.

Alternativ ist es aber auch möglich, die Filterplatte nach der Erfindung durch Fräsen herzustellen.

Die Erfindung wird im folgenden anhand zweier in der Zeichnung dargestellter Ausführungsbeispiele näher erläutert. In der Zeichnung zeigen:

Figur 1 eine Kammerfilterplatte in Draufsicht,

Figuren 2, 3 und 4 jeweils einen Querschnitt gemäß der Linien II-II, III-III und IV-IV in Fig. 1,

Figur 5 ein vereinfachtes Schaubild zum Ausführungsbeispiel nach Fig. 1 bis 4 und

Figur 6 ein zweites Ausführungsbeispiel im vereinfachten Schaubild.

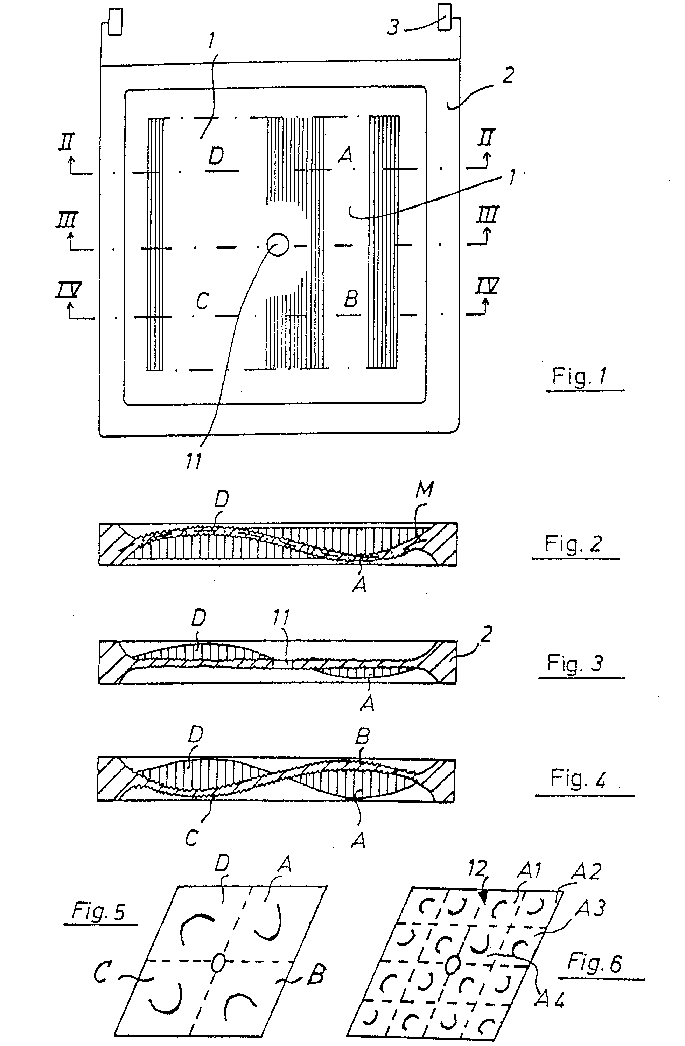

Die in den Fig. 1 und 5 in schematischer Form dargestellte Kammerfilterplatte besteht aus einem, beidseits mit einer Kanalierung versehenen Kammerboden 1 und einem ringsum laufenden verdickten Rand 2, dessen Dicke etwa vier bis fünf mal so groß ist wie die des Kammerbodens 1. Beim gezeigten Ausführungsbeispiel wird die Kammerfilterplatte an ihren oberen Ecken mittels Laufrollen 3 an Führungsschienen einer Filterpresse aufgehängt.

Wie aus den Fig. 2 bis 4 ersichtlich ist, ist der Kammerboden 1, bzw. seine Mittelfläche M, nach beiden Seiten gleich weit aus der Mittelebene der Filterplatte ausgewölbt, wobei der Boden aber innerhalb des vom Rand 2 umschlossenen Raumes verbleibt. Dabei ist der Kammerboden 1 in seinen vier Quadranten A, B, C, D jeweils abwechselnd in entgegengesetzte Richtungen gewölbt, so daß in der Plattenmitte ein Knotenpunkt der vier Wölbungen liegt. Diese Ausführungsform ist z. B. geeignet für Kammerfilterplatten mit mittiger Fluidzufuhr, z. B. mittiger Trübezufuhr 11. Die Filterplatte ist um ihre vertikale Mittelachse um 180° drehsymmetrisch, so daß sie in beiden Wendelagen im Filterpressenpaket eingebaut werden kann.

In Fig. 6 ist ein Ausführungsbeispiel gezeigt, bei welchem jeder Quadrant, z. B. A, des Kammerbodens 12 aus vier Unterquadranten $A_1$, $A_2$, $A_3$, $A_4$ besteht. Die diagonal benachbarten Unterquadranten sind dabei immer in derselben Richtung ausgewölbt.

## Patentansprüche

1. Filterplatte für Filterpressen, mit einem ringsum laufenden verdickten Rand und mit einem Kammerboden, dessen Mittelfläche gewölbt ist und der innerhalb des vom Rand umschlossenen Raumes liegt, dadurch gekennzeichnet, daß die Mittelfläche (M) des Kammerbodens (1) in allen vier Quadranten (A, B, C, D) abwechselnd in entgegengesetzte Richtungen ausgewölbt und die Filterplatte wendesymmetrisch und somit in beiden Wendelagen in ein Filterplattenpaket einbaubar ist.

2. Filterplatte nach Anspruch 1, dadurch gekennzeichnet, daß sie nach beiden Seiten hin gleich weit aus der Mittelebene der Filterplatte ausgewölbt ist.

3. Filterplatte nach Anspruch 2, dadurch gekennzeichnet, daß jeder Quadrant (A) der Platte aus vier Unterquadranten ($A_1$, $A_2$, $A_3$, $A_4$) mit jeweils paarweise entgegengesetzter Wölbungsrichtung besteht.

4. Filterplatte nach einem der vorangegangenen Ansprüche, dadurch gekennzeichnet, daß die Dicke des Kammerbodens (1) etwa ein Viertel der Dicke des Randes (2) beträgt.

5. Filterplatte nach einem oder mehreren der Ansprüche 1 bis 4, dadurch gekennzeichnet, daß sie aus Gußmaterial, z. B. aus Graphitgrauguß, Kugelgraphitguß oder Kunststoff, gefertigt ist.

6. Filterplatte nach einem der vorangegangenen Ansprüche, dadurch gekennzeichnet, daß sie durch Fräsen hergestellt ist.

## Claims

1. Filter plate for filter presses, with a continuous thickened rim defining an outer periphery of the filter-plate and with a chamber bottom, the median plane of which is curved and lies within the space encompassed by the rim; characterised in that the median plane (M) of the chamber bottom (1) is curved in all its four quadrants (A, B, C, D) alternatingly into opposite directions and that the filter plate is reversibly symmetrical and thus is insertable in both its turned positions in a filter plate pack.

2. Filter plate as claimed in claim 1, characterised in that it has the same extent of curvature on both sides of the median plane of the filter plate.

3. Filter plate as claimed in claim 2, characterised in that each quadrant (A) of the plate consists of four secondary quadrants ($A_1$, $A_2$, $A_3$, $A_4$) with a direction of curvature respectivly opposed in pairs.

4. Filter plate as claimed in one of the preceding claims, characterised in that the thickness of the chamber bottom (1) is about one-fourth a thickness of the rim (2).

5. Filter plate as claimed in one or several of the claims 1 to 4, characterised in that it is produced from cast material, for example graphitic grey cast iron, modular iron, or a synthetic resin.

6. Filter plate as claimed in one of the preceding claims 1, characterised in that it is produced by milling.

## Revendications

1. Plaque filtrante pour filtres-presses, avec un rebord épais contournant la plaque et avec un fond de chambre, dont le plan médian est voûté et se trouve à l'intérieur de l'espace entouné par le rebord, caractérisée en ce que le plan médian (M) du fond (1) de chambre est voûté dans tous ses quatre quadrants (A, B, C, D) tour à tour en sens contraire et que la plaque filtrante est renversablement symétrique et ainsi encastrable dans deux orientations renversées dans un paquet de plaques filtrantes.

2. Plaque filtrante selon la revendication 1, caractérisée en ce qu'elle est voûtée de ses deux côtés à des proportions égales.

3. Plaque filtrante selon la revendication 2, caractérisée en ce que chaque quadrant (A) de la plaque consiste de quatre sous-quadrants ($A_1$, $A_2$, $A_3$, $A_4$) voûtés chaque fois deux à deux en sens contraires.

4. Plaque filtrante selon une des revendications précédentes, caractérisée en ce que l'épaisseur du fond (1) de chambre se monte à peu près à un quart de l'épaisseur du rebord (2).

5. Plaque filtrante selon une ou plusieurs des revendications 1 à 4, caractérisée en ce qu'elle est en fonte, par exemple en fonte grise à graphite ou en fonte à graphite sphéroïdal, ou qu'elle est en coulée de matière plastique.

6. Plaque filtrante selon une des revendications précédentes, caractérisée en ce qu'elle est faite par fraisage.

0 066 752

Fig. 1

Fig. 2

Fig. 3

Fig. 4

Fig. 5

Fig. 6

1